# EUROPEAN PATENT SPECIFICATION

(11) **EP 0 506 116 B1**
(45) Date of publication and mention of the grant of the patent: **31.01.1996**
(21) Application number: 92105371.6
(22) Date of filing: 27.03.1992
(51) Int. Cl.: F21V 7/00, F21V 8/00, G02F 1/1335, G09F 13/18

(54) **Surface light source device**
Flächenartige Lichtquelle
Source lumineuse plane

(30) Priority: 29.03.1991 JP 93772/91; 17.06.1991 JP 173070/91; 18.06.1991 JP 174324/91
(43) Date of publication of application: 30.09.1992
(73) Proprietor: Nissha Printing Co., Ltd., Nakakyo-ku Kyoto-shi Kyoto-fu 604 (JP)
(72) Inventor: Yamamoto, Kunitoshi, c/o Nissha Printing Co., Ltd., Kyoto-shi, Kyoto-fu (JP); Fukushima, Hiroshi, c/o Nissha Printing Co., Ltd., Kyoto-shi, Kyoto-fu (JP)
(74) Representative: Glawe, Delfs, Moll & Partner

(56) References cited:
- EP-A- 0 442 529
- DE-U- 8 914 233
- US-A- 2 347 665

## Description

### BACKGROUND OF THE INVENTION

The present invention relates to a thin surface light source device comprising a line light source provided on one side face of a transparent light guiding plate, a side face reflection layer formed on the other side face of the light guiding plate, a light diffusion/transmission section and a white back face reflection layer each formed on the back face of the light guiding plate.

The surface light source devices of the present invention are uniform in quality and suitable for use as the back-light of a liquid crystal display device.

Conventionally, thin surface light source devices have either one line light source provided on one side face of a light guiding plate or two line light sources provided on both side faces of the light guiding plate. A line light source device having one line light source consumes less power and is lighter than the one having two line light sources, but has a disadvantage that the surface emission luminance of the light guiding plate is nonuniform depending because it gradually decreases with increasing distance from the line light source.

Proposals have been made to overcome this disadvantage. For example, a light diffusion/transmission section is formed on the back face of the light guiding plate so that the light diffusion/transmission section diffuses light guided by the light guiding plate. A surface light source device according to the preamble of claim 1 and known from US-A-4,985,809 is superior in this respect.

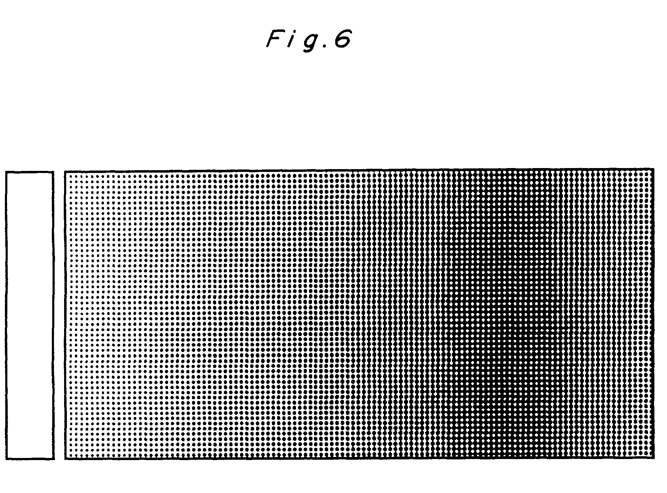

This prior art device has a light diffusion/transmission section as shown in Fig. 6, composed of a fine dot pattern printed on the back face of the light guiding plate. Referring to Fig. 7, the ratio of the area of the dots to the whole area of the back face of the light guiding plate gradually becomes greater with the distance increasing from the side face (a') on the line light source side of the light guiding plate up to a position (b') at which the surface emission luminance of the light guiding plate is lowest, and this ratio becomes gradually smaller in the region from the position (b') up to a side face (c') which has the side face reflection layer.

That is, the prior art device was based on a phenomenon that the surface emission luminance of the light guiding plate first gradually decreases with increasing distance from the side face on the line light source side and then again increases from the position at which the surface emission luminance of the light guiding plate is lowest toward the side face having the side face reflection layer, under the influence of light reflected by the side face reflection layer. Accordingly an ideal surface light source device, which provides a uniform surface emission luminance through the light guiding plate as shown in Fig 7 by the curve (Z') expressing the surface emission luminance of the light guiding plate, can be manufactured by making the curve (X') which expresses the change of the surface emission luminance of the light guiding plate inversely proportional to the curve (Y') which expresses the change in the ratio of dot pattern of the light diffusion/transmission section to the whole area of the back face of the light guiding plate.

However, it is very difficult to mass-produce the above-described surface light source device because it is impossible to produce a plurality of line light sources having an equal luminance and a plurality of light guiding plates having an equal light diffusion degree even though each device is strictly quality-controlled. Since the line light source comprises a plurality of parts or substances such as a glass tube, electrodes, a fluorescent substance, mercury, and inactive gas, the luminances of line light sources are different piece to piece because the qualities of the parts are varied parts to parts and further, it is difficult to assemble a plurality of parts in the same quality. In addition, it is impossible to print dot patterns on the back face of the light guiding plate all in the same quality. The following discrepancies occur piece to piece in the positions of dots on the light diffusion/transmission section, the sizes of dots, the thicknesses of ink films of dots, the thickness of light guiding plates, the size thereof, and the sizes of cut faces thereof. Thus, it is unavoidable that the light diffusion degrees of the light guiding plates are different from each other.

Therefore, according to mass-produced surface light source devices according to US-A- 4,985,809, the following disadvantages occur: Let it be supposed in Fig 7 that a curve (Y') expresses the change in the ratio of the area of dot pattern of the light diffusion/transmission section to the whole area is obtained when a position (B') at which ratio of the area of dot patterns of the light diffusion/transmission section to the whole area of the back face of the light guiding plate is maximum is located at the position (b') where the surface emission luminance of the light guiding plate is lowest; a curve Y'(1) expresses the change in the ratio of the area of dot patterns of the light diffusion/transmission section to the whole area of the back face of the light guiding plate is obtained when the position (B') is located at b'(1) situated between the side face (a') and the position (b'); and a curve Y'(2) expresses the change in the ratio of the area of dot patterns of the light diffusion/transmission section to the whole area of the back face of the light guiding plate is obtained when the position (B') is located at a position b'(2) situated between the position (b') and the side face (c'). A curve Z'(1) expressing the surface emission luminance of the light guiding plate and corresponding to the curve Y'(1) is greater than a curve (Z') in parallel therewith in the region from the side face (a') to the position b'(1), decreases greatly and becomes smaller than that in the region from the position b'(1) to the position (b'), and becomes smaller than that in parallel therewith in the region from the position (b') to the side face (c'). The curve (Z') expressing the surface emission luminance of the light guiding plate corresponds to the curve (Y'). A curve Z'(2) expressing the surface emission luminance of the light guiding plate and corresponding to the curve Y'(2) is smaller than the curve (Z') in parallel therewith in the region from the side face (a') to the position (b'), increases greatly and becomes greater than that in the region from the position (b') to the position b'(2), and is greater than that in parallel therewith in the region from the position b'(2) to the side face (c'). Therefore, the gap between the high luminance point H'(1) and the low luminance point L'(1) of the curve Z'(1) becomes greater with the approach of the position (B') from the position (b') toward the position b'(1). Similarly, the gap between the high luminance point H'(2) and the low luminance point L'(2) of the curve Z'(2) becomes greater with the approach of the position (B') from the position (b') toward the position b'(2). Thus, the quality of devices according to US-A-4,985,809 varies piece to piece. The qualities of the devices can be made to be equal to each other by narrowing the permissible range of the position (B') indeed, but it is necessary to control the quality of the line light source and the light guiding plate strictly.

### SUMMARY OF THE INVENTION

It is an object of the present invention to provide a surface light source device capable of reducing the reflection operation of a side face reflection layer.

In accomplishing these and other objects, according to one aspect of the present invention, there is provided a surface light source device as claimed in claim 1.

In this construction, the ratio of dot area to the area of the light diffusion/transmission section gradually increases with a distance increase in the region from the side face on the light source side of the light guiding plate to a position at which the surface emission luminance of the light guiding plate is lowest and is constant in the region from the position to the side face on the side face reflection layer side of the light guiding plate.

### BRIEF DESCRIPTION OF THE DRAWINGS

These and other objects and features of the present invention will become apparent from the following description taken in conjunction with the preferred embodiments thereof with reference to the accompanying drawings, in which:
Fig. 1 is a sectional view showing a surface light source device according to a first embodiment of the present invention;
Fig. 2 is an enlarged bottom view showing a surface light source device according to the embodiment shown in Fig. 1;
Fig. 3 is an enlarged bottom view showing a surface light source device according to a second embodiment of the present invention;
Fig. 4 is a bottom view showing a surface light source device according to a third embodiment of the present invention;
Fig. 5 is a graph showing the relationship of a curve (X) expressing the change of surface emission luminance, a curve (Y) representing the ratio of dot area of a light diffusion/transmission section to the area of the back face of the light guiding plate, and a curve (Z) expressing surface emission luminance;
Fig. 6 is an enlarged bottom view showing a conventional surface light source device; and
Fig. 7 is a graph showing the relationship of a curve (X') expressing the change of surface emission luminance, a curve (Y') representing the ratio of dot area of a light diffusion/transmission section to the area of the back face of a light guiding plate, and a curve (Z') expressing surface emission luminance for the conventional surface light source device shown in Fig 6 in which the change of the surface emission luminance of the light guiding plate is inversely proportional to the change of the ratio of dot area of a light diffusion/transmission section to the area of the back face of the light guiding plate.

### DETAILED DESCRIPTION OF THE INVENTION

Before the description of the present invention proceeds, it is to be noted that like parts are designated by like reference numerals throughout the accompanying drawings.

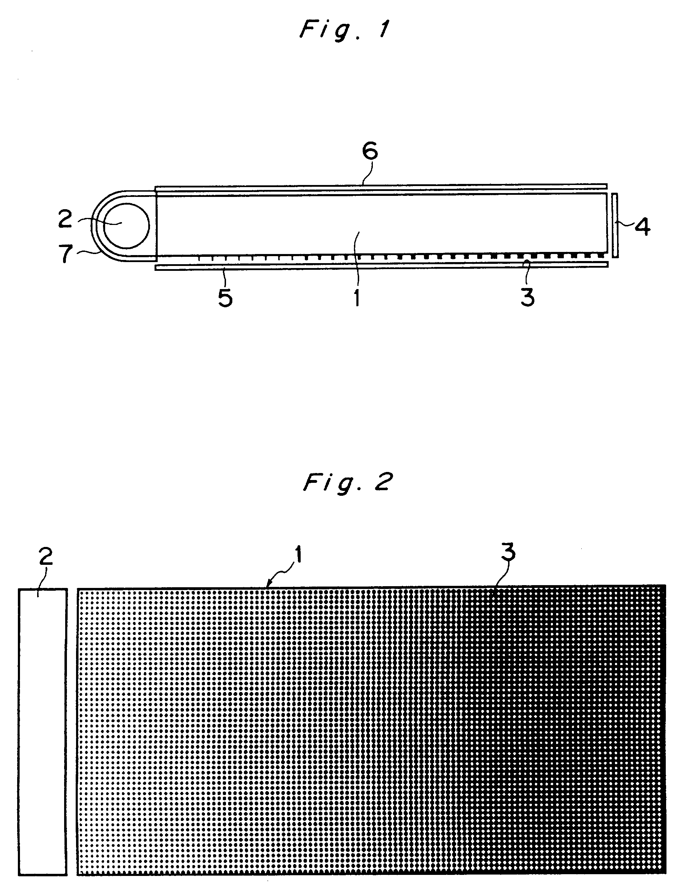

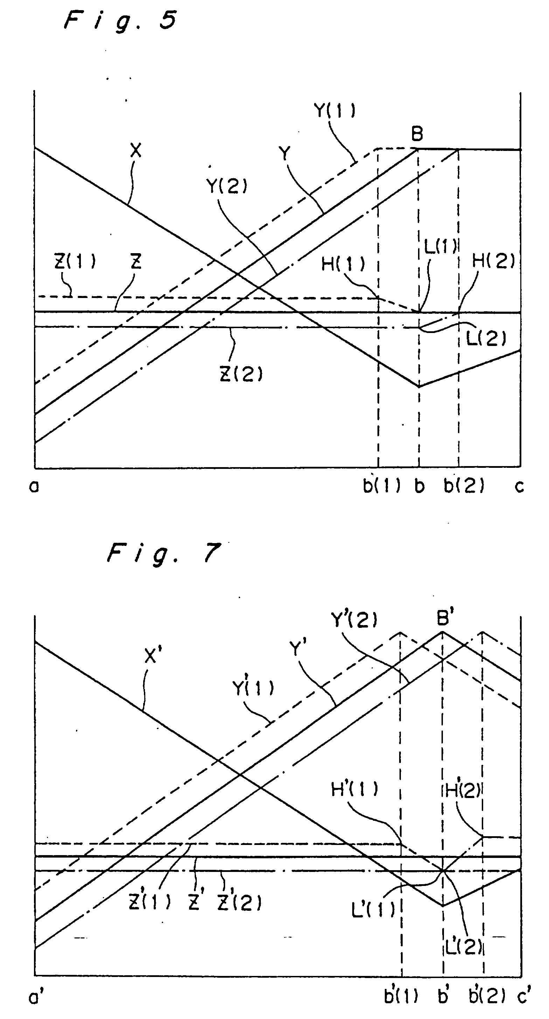

Embodiments of the present invention are described below with reference to Figs. 1 through 5. A surface light source device comprises a light guiding plate 1; a line light source 2 positioned on one side face of the light guiding plate 1, namely, on a side face (a) (refer to Figs. 5 and 6) on the line light source side; a side face reflection layer 4 provided on the other side (c) (refer to Figs. 5 and 6) of the side face (a), and a light diffusion/transmission section 3 provided on the back face of the light guiding plate 1, and a white back face reflection layer 5 provided on the back face side of the light guiding plate 1. This construction allows light emitted by the line light source 2 to be effectively utilized to provide a high luminance as described below.

The line light source 2 is composed of a cathode ray tube, for example, a hot cathode ray tube or a cold cathode ray tube. Preferably, a curved reflection plate 7 is provided to enclose the line light source 2 so as to utilize light emitted by the line light source 2 effectively.

The thickness, material, and configuration of the light guiding plate 1 are selected depending on use. For example, in order to use the light guiding plate 1 as the backlight of a liquid crystal display device, its thickness is preferably in the range of from 1mm to 8mm; its material is preferably selected from acrylic resin, polycarbonate resin, polyvinyl chloride, or glass; and its configuration is preferably rectangular or square.

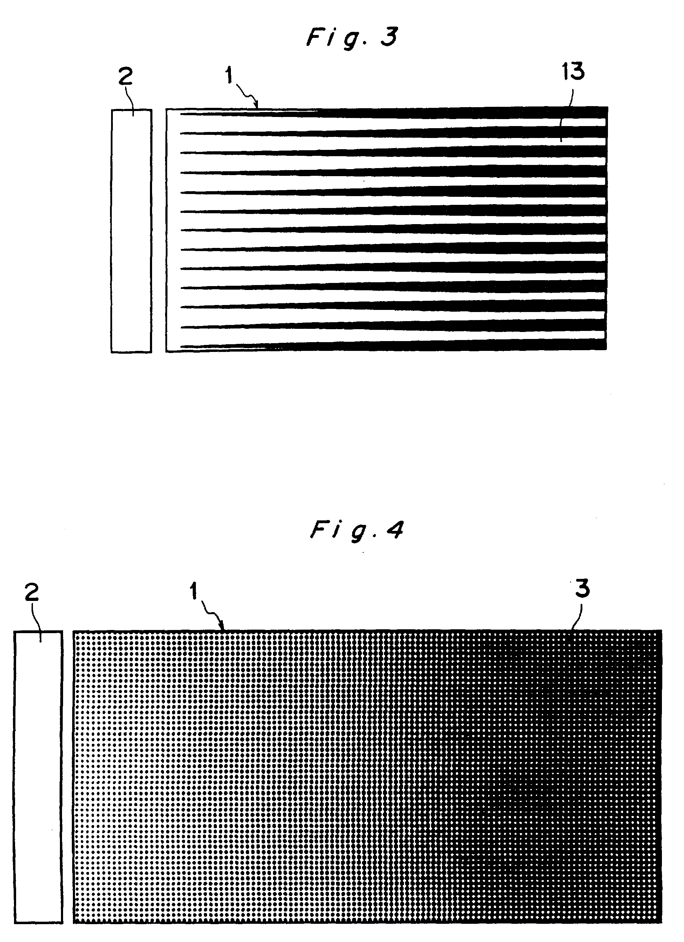

The light diffusion/transmission section 3 is formed by means of gravure printing, offset printing, screen printing or transfer. The ratio of area of the light diffusion/transmission section 3 to the whole area of the back face of the light guiding plate 1 gradually increases with a distance increase in the region from the side face (a) on the light source side of the light guiding plate 1 to a position (b) at which the surface emission luminance of the light guiding plate 1 is lowest, and said ratio is constant in the region from the position (b) to the side face (c) on the side face reflection layer side of the light guiding plate 1. The change of the ratio of the area of the light diffusion/transmission section 3 to the whole area of the back face of the light guiding plate 1 can be accomplished by dots gradationally changed as shown in Figs. 1 and 2 or stripes 13 gradationally changed as shown in Fig. 3. The change of the ratio of the dot area of the light diffusion/transmission section 3 to the area of the back face of the light guiding plate 1 is indicated in the form of a curve (Y) as shown in Fig. 4. The dot can have arbitrary shape such as round, square, or chain dot-shape. The line light source 2 is bright in the center portion thereof and dark in both end portions thereof. Therefore, the surface of the light guiding plate 1 can be more uniformly luminous by making constant the ratio of the dot area of the light diffusion/transmission section 3 to the whole area of the back face of the light guiding plate 1 in the vicinity of the line light source 2 in the region from the center portion of the guiding plate 1 toward a predetermined position thereof situated between the center portion thereof and one end portion thereof in a direction parallel with the axial direction of the line light source 2, and making said ratio to increase quadratically between said predetermined position and the one end thereof, as shown in Fig. 4. The predetermined position is, for example, a position where the surface emission luminance of the light guiding plate 1 in the direction parallel with the axial direction of the line light source 2 is lowest. It is preferable to make constant, in addition to the above arrangement, the ratio of the dot area of the light diffusion/transmission section 3 to the whole area of the back face of the light guiding plate 1 in the vicinity of the line light source 2 in the region from the center portion of the light guiding plate 1 toward a predetermined position thereof, where the surface emission luminance of the light guiding plate 1 in the direction parallel with the axial direction of the line light source 2 is lowest, situated between the center portion thereof and one end portion thereof in a direction parallel with the axial direction of the line light source 2 and to make said ratio to increase between said predetermined position and the one end thereof so that the sizes of the dots are gradually decreased from the corner of the one end to an arc which center is the corner of the one end, the arc being drawn at the predetermined position.

Preferably, the light diffusion/transmission section 3 is composed of ink containing a granular transparent substance such as calcium carbonate or silica having a refractive index almost equal to or smaller than that of the light guiding plate 1. Thus, the light diffusion of the light diffusion/transmission section 3 can be improved. A position at which the ratio of the dot area of the light diffusion/transmission section 3 to the area of the back face of the light guiding plate 1 is maximum does not mean that the ratio is not 100%.

The side face reflection layer 4 is formed with a white film or a metal plate adhered to the side face (b) or white ink applied thereto or a metal evaporated thereon. The side face reflection layer 4 can be formed on any side face other than the side face (a).

Since the back face reflection layer 5 is composed of a white film or a white plate overlapped on the back face of the light guiding plate 1, slight gaps are formed between the light guiding plate 1 and the back face reflection layer 5 in the regions in which the light diffusion/transmission section 3 is not formed. Therefore, light emitted by the line light source 2 is almost totally reflected in the interior of the light guiding plate 1. That is, light can be guided in the light guiding plate 1 at a high percentage.

The side face reflection layer 4 or the back face reflection layer 5 can be composed of a casing, for use in the surface light source device, having white paint applied to the inner surface thereof.

In addition to the above-described essential components of the surface light source device, a light diffusion layer 6 can be provided, if necessary, on the surface of the light guiding plate 1 where any light diffusion/transmission section is not formed. In this case, preferably, the light diffusion layer 6 does not contact the light guiding plate 1 but an interval is provided between the light diffusion layer 6 and the light guiding plate 1 so as to allow light to be guided in the light guiding plate 1 at a high percentage. The light diffusion layer 6 can be formed with a resin film coated with a light diffusion substance, or a light-diffusive resin film or a light-diffusive resin plate which material has light-diffusive function.

According to the above construction, the ratio of dot area of the light diffusion/transmission section 3 to the whole area of the back face of the light guiding plate 1 is smallest in the vicinity of the side face (a) on the line light source side of the light guiding plate 1. Therefore, the greater part of light emitted by the line light source 2 is sequentially guided to the interior of the light guiding plate 1 while light is being totally reflected repeatedly, i.e., the incident angle and the reflection angle thereof are equal to each other. A part of the light emitted by the line light source 2 is scattered on the light diffusion/transmission section 3 and directly guided to the surface of the light guiding plate 1 or reaches the back face reflection layer 5 through the light diffusion/transmission section 3. And then, the part of the light enter the light diffusion/transmission section 3 again after it is reflected by the back face reflection layer 5, and thereafter, is indirectly guided to the surface of the light guiding plate 1. A part of light which has been scattered in the light diffusion/transmission section 3 is totally reflected inside the light guiding plate 1.

The ratio of the dot area of the light diffusion/transmission section 3 to the whole area of the back face of the light guiding plate 1 gradually increases with as the distance increases from the side face (a) and as the distance decreases to the position (b) at which the surface emission luminance of the light guiding plate 1 is lowest. Therefore, the quantity of light which is totally reflected in the interior of the light guiding plate 1 gradually decreases and the quantity of light which is scattered at the light diffusion/transmission section 3 and directly or indirectly guided to the surface of the light guiding plate 1 gradually increases.

The ratio of the dot area of the light diffusion/transmission section 3 to the whole area of the back face of the light guiding plate 1 is greatest in the position (b) and does not change in the region from the position (b) to the side face (c) on the side face reflection layer side. Therefore, in the region from the position (b) to the side face (c), light emitted by the line light source 2 is mostly scattered on the light diffusion/transmission section 3 and then, guided to the surface of the light guiding plate 1 directly or indirectly. A part of light emitted by the line light source 2 is sequentially guided to the interior of the light guiding plate 1 while being repeatedly totally reflected therein. The ratio of the dot area of the light diffusion/transmission section 3 to the whole area of the back face of the light guiding plate 1 does not change in the region from the position (b) to the side face (c). Accordingly, the quantity of light reflected by the light diffusion/transmission section 3 is greater than that provided by the device according to US-A- 4,985,809 in which the ratio of dot area of the light diffusion/transmission section 3 to the whole area of the back face of the light guiding plate 1 gradually decreases, and consequently, the quantity of light which reaches the side face reflection layer 4 is smaller than that supplied by the device according to US-A- 4,985,809. That is, the quantity of light reflected by the side face reflection layer 4 is smaller. Therefore, according to the device of the embodiment, the reflection operation of the side face reflection layer 4 can be less than that of the device disclosed in US-A- 4,985,809.

A cold cathode ray tube having a length of 145mm, a diameter of 4mm, and a luminance of 12000 cd/m (manufactured by Matsushita Electric Co., Ltd) was prepared as the line light source 1. The light guiding plate 1 was made of a transparent acrylic resin plate having a length of 220mm, a width of 150mm, and a thickness of 2mm.

The change of the surface emission luminance of the line light source 1 was examined to find a curve (X) indicating the change in the surface emission luminance of the line light source 1. Based on the curve (X), a plurality of dots was printed on the back face of the light guiding plate 1 by screen printing to form the light diffusion/transparent section 3. The dots comprised mat ink containing pigment consisting of a mixture of calcium carbonate and silica, methyl methacrylate resin, and a solvent of ketone group.

The ratio of the dot area of the light diffusion/transparent section 3 to the whole area of the back face of the light guiding plate 1 gradually increases inversely proportional to the curve expressing the change in the surface emission luminance of the light guiding plate 1 in the region from the side face (a) to the portion (b) at which the surface emission luminance is lowest, and is constant in the region from the portion (b) to the side face (c).

A white film (manufactured by Toray Co., Ltd.) was adhered to the side face (c).

The surface light source device comprised a back face reflection layer 5 made of a white polyethylene terephthalate resin plate provided on a case for use in the surface light source device, a light guiding plate 1 provided on the back face reflection layer 5, a light diffusion layer 6 consisting of milky-white polyethylene terephthalate resin plate provided on the light guiding plate 1, a line light source 2 provided on the side face (a), and a curved reflection plate 7 which enclosed the line light source 2.

The device approximately uniformly had a high surface emission luminance (350cd/m³) through the luminous surface.

As described above, in the embodiments, the ratio of the dot area of the light diffusion/transmission section 3 to the whole area of the back face of the light guiding plate 1 gradually increases with a distance increase in the region from the side face (a) to a position (b) at which the surface emission luminance of the light guiding plate 1 is lowest, and is constant in the region from the position (b) to the side face (c). Thus, the following advantage can be obtained.

In mass-producing the surface light source device of the embodiments, surface light source devices have approximately uniform quality even though the position (B) of the light diffusion/transmission section 3 having the greatest ratio of the dot area of the light diffusion/transmission section 3 to the whole area of the back face of the light guiding plate 1 is situated at a position b(1) between the side face (a) and the position (b) or located at a position b(2) between the position (b) and the side face (c).

Curves (Y), Y(1) and Y(2) of Fig. 5 expressing the change in the ratio of the dot area of the light diffusion/transmission section 3 to the whole area of the back face of the light guiding plate 1 are obtained when the position (B) of the light diffusion/transmission section 3 is located at the position (b), b(1) and b(2), respectively.

Curves Z(1), Z and Z(2) expressing the surface emission luminance of the light guiding plate 1 correspond, respectively, to the case where the position (B) of the light diffusion/transmission section 3 is located at the position b(1), (b) and b(2). The curve Z(1) is greater than the curve (Z) and parallel therewith in the region of from the side face (a) to the position b(1), approaches the curve (Z) in the region of from the position b(1) to the position (b), and becomes equal to the curve (Z) in the region of from the position (b) to the side face (c). Therefore, the gap between the highest luminance point H(1) and the lowest luminance point L(1) of the curve Z(1) is small, and in fact half as small as the gap between the high luminance point H'(1) and the low luminance point L'(1) of the curve Z'(1) of Fig. 6 according to the device disclosed in US-A-4,985,809. The curve Z(2) in Fig. 5 is smaller than the curve (Z) and parallel therewith in Fig. 5 in the region from the side face (a) to the position (b), approaches the curve (Z) in the region from the position (b) to the position b(2), and becomes equal to the curve (Z) in the region from the position b(2) to the side face (c). Therefore, the gap between the highest luminance point H(2) and the lowest luminance point L(2) of the curve Z(2) is small, and in fact half as small as the gap between the high luminance point H'(2) and the low luminance point L'(2) of the curve Z'(2) of Fig. 6 according to the device disclosed in US-A- 4,985,809.

As described above, supposing that the surface light source devices according to the embodiments and the prior art device according to US-A- 4,985,809 are quality-controlled in the same degree in mass-production, those of the embodiments are twice as reliable as the prior art device. That is, even though the quality control of the line light source, the light guiding plate, and other components of the embodiments is made half as strictly as the quality control of the prior art device, the quality can be the same because the permissible range of the dislocation of the position (B) of the devices of the embodiments is wider.

Although the present invention has been fully described in connection with the preferred embodiments thereof with reference to the accompanying drawings, it is to be noted that various changes and modifications are apparent to those skilled in the art within the scope of the present invention as defined by the appended claims.

## Claims

1. A surface light source device comprising
a transparent light guiding plate (1) having a front face, a back face and first and second opposed side faces (a, c), a line light source (2) provided on said first side face (a) and a reflecting layer provided on said second side face (c), a light diffusion/transmission section (3) provided on said back face and a white reflection layer provided on said back face over the light diffusion/transmission section,
said light diffusion/transmission section being formed by a plurality of light diffusion areas which are distributed such that the ratio of said areas to the whole area of said back face increases gradually with increasing distance from said first side face (a) up to an intermediate position (b) at which the surface emission luminance of the light guiding plate is lowest, **characterized** in that said ratio is constant from said intermediate position (b) up to said second side face (c).

2. A surface light source device as claimed in claim 1, wherein in the direction parallel to the axial direction of the line light source (2) said ratio is constant in the region from the center portion of the light guiding plate (1) up to a predetermined position located between the center portion and one end of the light guiding plate, and quadratically increases in the region from said predetermined position to said one end of the light guiding plate.

3. A surface light source device as claimed in claim 1 or 2, wherein a light diffusion layer (6) is provided on the front face of the light guiding plate.

4. A surface light source device as claimed in any one of claims 1 through 3, wherein the light diffusion/transmission section contains a granular transparent substance having a refractive index almost equal to that of the light guiding plate or smaller than that.

5. A surface light source device as claimed in any one of claims 1 through 4, wherein said light diffusing areas of the light diffusion/transmission section (3) are dots.

## Patentansprüche

1. Flächenlichtquelle mit einer transparenten Lichtleitplatte (1), die eine Vorderfläche, eine Rückfläche und eine erste und zweite Seitenfläche (a, c), die einander gegenüberliegen, aufweist, eine an der ersten Seitenfläche (a) vorgesehenen linearen Lichtquelle (2) und einer an der zweiten Seitenfläche (c) vorgesehenen reflektierenden Schicht, einem an der Rückfläche vorgesehenen Lichtdiffusions/-Transmissionsabschnitt (3) und einer weißen Reflexionsschicht, die auf der Rückfläche über dem Lichtdiffusions/-Transmissionsabschnitt vorgesehen ist, wobei der Lichtdiffusions/-Transmissionsabschnitt durch eine Vielzahl von Lichtdiffusionsflächen gebildet ist, die derart verteilt sind, daß das Verhältnis dieser Flächen zur Gesamtfläche der Rückfläche allmählich zunimmt mit zunehmenden Abstand von der ersten Seitenfläche (a) bis zu einer Zwischenposition (b), an welcher die Flächenemissionsluminanz der Lichtleitplatte am niedrigsten ist, dadurch **gekennzeichnet**, daß das Verhältnis von der Zwischenposition (b) bis zur zweiten Seitenfläche (c) konstant ist.

2. Flächenlichtquelle nach Anspruch 1, bei der in der zur Axialrichtung der linearen Lichtquelle (2) parallelen Richtung das genannte Verhältnis konstant ist in dem Bereich vom mittleren Teil der Lichtplatte (1) bis zu einer vorgegebenen Position, die zwischen dem mittleren Bereich und einem Ende der Lichtleitplatte liegt, und dann quadratisch zunimmt in dem Bereich von der vorgegebenen Position bis zu dem einen Ende der Lichtleitplatte.

3. Flächenlichtquelle nach Anspruch 1 oder 2, bei der eine Lichtdiffusionsschicht (6) auf der Vorderfläche der Lichtleitplatte vorgesehen ist.

4. Flächenlichtquelle nach einem der Ansprüche 1 bis 3, bei dem der Lichtdiffusions-/Transmissionsabschnitt eine granulatförmige transparente Substanz enthält, deren Brechungsindex nahezu gleich dem der Lichtleitplatte oder kleiner als dieser ist.

5. Flächenlichtquelle nach einem der Ansprüche 1 bis 4, bei dem die Lichtdiffusionsflächen des Lichtdiffusions-/Transmissionsabschnitt (3) Punkte sind.

## Revendications

1. Dispositif formant source de lumière planiforme comprenant
une plaque transparente (1) de guidage de la lumière possédant une face avant et une face arrière et des première et seconde faces latérales opposées (a,c), une source de lumière linéaire (2) disposée sur ladite première face latérale (a) et une couche réfléchissante disposée sur ladite seconde face latérale (c), une section de diffusion / transmission de lumière (3) disposée sur ladite face arrière et une couche de réflexion blanche disposée sur ladite face arrière au-dessus de la section de diffusion / transmission de la lumière,
ladite section de diffusion / transmission de la lumière étant formée par une pluralité de surfaces de diffusion de lumière, qui sont réparties de telle sorte que le rapport desdites surfaces à la surface totale de ladite face arrière augmente graduellement lorsque la distance depuis ladite première face latérale (a) jusqu'à une position intermédiaire (b), dans laquelle la luminance d'émission de surface de la plaque de guidage de la lumière est minimale, augmente, caractérisé en ce que ledit rapport est constant depuis ladite position intermédiaire (b) jusqu'à ladite seconde face latérale (c).

2. Dispositif formant source de lumière planiforme selon la revendication 1, dans lequel dans la direction parallèle à la direction axiale de la source de lumière linéaire (2), ledit rapport est constant dans la région qui s'étend de la partie centrale de la plaque (1) de guidage de la lumière jusqu'à une position prédéterminée située entre la partie centrale et une première extrémité de la plaque de guidage de la lumière, et augmente de façon quadratique dans la région qui s'étend depuis ladite position prédéterminée jusqu'à ladite première extrémité de la plaque de guidage de la lumière.

3. Dispositif formant source de lumière planiforme selon la revendication 1 ou 2, dans lequel une couche (6) de diffusion de la lumière est prévue sur la face avant de la plaque de guidage de la lumière.

4. Dispositif formant source de lumière planiforme selon l'une quelconque des revendications 1 à 3, dans lequel la section de diffusion / transmission de la lumière contient une substance granuleuse transparente possédant un indice de réfraction presque égal ou inférieur à celui de la plaque de guidage de la lumière.

5. Dispositif formant source de lumière planiforme selon l'une quelconque des revendications 1 à 4, dans lequel lesdites surfaces de diffusion de lumière de la section (3) de diffusion / transmission de la lumière sont des points.
